# EUROPEAN PATENT APPLICATION

(11) **EP 4 239 559 A1**
(43) Date of publication of application: **06.09.2023**
(21) Application number: 23159823.6
(22) Date of filing: 03.03.2023
(51) Int. Cl.: G06Q 30/0242, G06F 3/01, G06V 10/25, G06Q 30/0241

(54) **ATTENTION PREDICTION**

(30) Priority: 04.03.2022 US 202217687147
(71) Applicant: Tobii AB, 182 17 Danderyd (SE)
(72) Inventor: Löfdahl, Emelie, 182 17 Danderyd (SE); Campbell, Fraser, 182 17 Danderyd (SE)
(74) Representative: Fabrizi, Andrea

(57) **Abstract**

An impression model (140, 240) is provided based on beacon information and gaze information received from a panel of a plurality of panelists. The beacon information defines content objects appearing on web pages visited by the panelist and the gaze information comprising gaze positions of the panelist. The beacon information is used to define impressions representing respective instances of a content object appearing on a web page and impression and attention parameters are determined for each impression. The impression parameters are representative of a content object associated with the impression and the attention parameters are representative of a panelist's fixation on the content object associated with the impression when appearing on a web page. A computer-implemented attention prediction model (150, 250) is trained based on impression and attention parameters retrieved from the impression model to predict user attention on a content object appearing on a web page.

## Description

### TECHNICAL FIELD

The present invention generally relates to computer-implemented attention prediction models, and in particular to a method and system for training such computer-implemented attention prediction models and uses thereof.

### BACKGROUND

Advertisers within the Advertisement Technology (ad-tech) spend billions of dollars on advertising, to influence brand perception and drive sales. However, the percentage of digital advertisements (ads), which actually are being clicked on by consumers is very low, and in many cases as low as 0.1 %. The difficulty of producing effective ads has led ad-tech companies to become ever more innovative with new ads formats and design in order to gain consumers' attention. However, the vast amount of advertising products makes it increasingly difficult for the companies to optimize their advertising cost spend and evaluate the various available ads formats.

US 2019/0302884 discloses methods and corresponding systems for the collection, transportation and analysis of attention data. The systems include a gaze determination device, a beacon, an attention data processing engine, and a correlation engine that receives the attention data to generate correlated attention data. In the methods, correlated attention data is used to modify a content that is provided to the user in real time and is used to modify that audience of users that the content is provided to.

In *"*Predicting visual fixation on digital advertisement using machine learning, Degree project in computer science and engineering", Hedlund, KTH Royal Institute of Technology, School of Electrical Engineering and Computer Science, 2020, it is investigated if advertisement fixation can be used as a complementary metric to click-through rate (CTR). Predictive performance of four popular machine learning models, previously used in CTR prediction; Logistic Regression, Random Forest, XGBoost, and Field-Aware Factorization Machines were analyzed. Logistic Regression and Random Forest along with k-fold cross validation were used to validate the process of incremental feature engineering. The results demonstrated that an ensemble of three of the models could predict advertisement fixation with an F1-score of 0.5972, and an AUC-ROC value of 0.8005. In addition, the most prominent features when predicting advertisement fixation were concluded to be hostname, brand, ad type, x-coordinate, as well as the width and height of the ad.

There is still a need for a tool that can be used by advertisers and other content publishers as a basis in designing media campaigns and ads.

### SUMMARY

It is a general objective to provide a computer-implemented (CI) attention prediction model that can be used to predict users' attention on content objects appearing on web pages.

An aspect relates to a method of training a CI attention prediction model. The method comprises receiving, for each panelist of a panel of a plurality of panelists, gaze information comprising gaze positions of the panelist and beacon information defining content objects appearing on web pages visited by the panelist. The method also comprises providing an impression model based on the beacon information and the gaze information received from the plurality of panelists. The impression model is provided by defining, based on the beacon information, impressions representing respective instances of a content object appearing on a web page and, for each impression, determining, based on the beacon information, impression parameters representative of a content object associated with the impression and determining, based on the gaze information, attention parameters representative of a panelist's fixation on the content object associated with the impression when appearing on a web page. The method further comprises training, based on impression parameters and attention parameters retrieved from the impression model, a CI attention prediction model to predict user attention on a content object appearing on a web page.

Another aspect relates to a method of predicting user attention. The method comprises determining at least one impression parameter representative of a content object to be presented to a user on a web page. The method also comprises predicting user attention on the content object displayed on a web page based on the at least one impression parameter and a CI attention prediction model trained based on impression parameters and attention parameters derived from an impression model. The impression parameters are representative of content objects associated with impressions and the attention parameters are representative of panelists' fixation on content objects associated with the impressions. The impression model is generated based on gaze positions of panelists of a panel of a plurality of panelists tracked while the panelists are browsing web pages and based on beacons detected while the panelists are browsing web pages and being associated with content objects presented to the panelists on the web pages.

A further aspect relates to a non-transitory computer-readable medium storing instructions that, when executed by a processor, cause the processor to provide an impression model based on beacon information and gaze information obtained from a panel of a plurality of panelists. The gaze information comprises, for each panelist of the panel, gaze positions of the panelist and the beacon information defines, for each panelist of the panel, content objects appearing on web pages visited by the panelist. The processor is caused to provide the impression model by defining impressions based on the beacon information and, for each impression, determining, based on the beacon information, impression parameters representative of a content object associated with the impression and determining, based on the gaze information, attention parameters representative of a panelist's fixation on the content object associated with the impression when appearing on a web page. The processor is also caused to train, based on impression parameters and attention parameters retrieved from the impression model, a CI attention prediction model to predict user attention on a content object appearing on a web page.

Yet another aspect relates to a non-transitory computer-readable medium storing instructions that, when executed by a processor, cause the processor to determine at least one impression parameter representative of a content object to be presented to a user on a web page. The processor is also caused to predict user attention on the content object displayed on a web page based on the at least one impression parameter and a CI attention prediction model trained based on impression parameters and attention parameters derived from an impression model. The impression parameters are representative of content objects associated with impressions and the attention parameters are representative of panelists' fixations on content objects associated with the impressions. The impression model is generated based on gaze positions of panelists of a panel of a plurality of panelists tracked while the panelists are browsing web pages and based on beacons detected while the panelists are browsing web pages and being associated with content objects presented to the panelists on the screen.

A further aspect relates to a system for training an attention prediction model. The system comprises a plurality of eye tracking devices configured to track eye movement of a panel of a plurality of panelists to generate gaze information comprising gaze positions of the panelists and CI beacon units configured to monitor web pages visited by the panelists to detect beacons associated with content objects appearing on the web pages and collect, for each detected beacon, beacon information defining the content object. The system further comprises a memory configured to store an impression model comprising impression parameters associated with impressions representing respective instances of a content object appearing on a web page and a CI attention prediction model configured to predict user attention on a content object appearing on a web page. The system additionally comprises a processor configured to update the impression model based on the beacon information and the gaze information obtained from the plurality of panelists by defining impressions based on the beacon information and, for each impression, determining, based on the beacon information, impression parameters representative of a content object associated with the impression and determining, based on the gaze information, attention parameters representative of a panelist's fixation on the content object associated with the impression when appearing on a web page. The processor is also caused to train, based on impression parameters and attention parameters retrieved from the impression model, the computer-implemented attention prediction model to predict a user's attention on a content object appearing on a web page.

### BRIEF DESCRIPTION OF THE DRAWINGS

The invention, together with further objects and advantages thereof, may best be understood by making reference to the following description taken together with the accompanying drawings, in which:
Fig. 1 is a schematic overview of training a CI attention prediction model according to an embodiment;
Fig. 2 is a schematic block diagram of a device for training a CI attention prediction model or predicting user attention according to an embodiment;
Fig. 3 is a schematic block diagram of a system for training a CI attention prediction model according to an embodiment;
Fig. 4 is a schematic block diagram of a device for training a CI attention prediction model or predicting user attention according to another embodiment;
Fig. 5 is a flow chart of a method of training a CI attention prediction model according to an embodiment;
Fig. 6 is a flow chart illustrating an embodiment of the updating step in Fig. 5;
Fig. 7 is a flow chart of a method of predicting user attention according to an embodiment;
Fig. 8 is a flow chart of a method of predicting user attention according to an embodiment; and
Fig. 9 schematically illustrates different advertisement (ad) units on a web page.

### DETAILED DESCRIPTION

The present invention generally relates to computer-implemented attention prediction models, and in particular to a method and system for training such computer-implemented attention prediction models and uses thereof.

The Advertisement Technology (ad-tech) companies and other content providers are spending a lot of effort and money on producing effective digital content, such as advertisements (ads), that captures the interests of users. The traditional metric in evaluating the performance of digital content, such as ads, has mainly been click-throughs. Click-through means that a user has clicked on the digital content, such as ad, and been redirected to the advertiser's web page. The click-through metric is usually presented as click-through rate (CTR), which is the ratio between number of clicks and the number of impressions for a digital content, such as ad. An impression is triggered when a web page has requested digital content, such as an ad, from a content providing server, received a response in return and the digital content has been rendered to some extent, though not necessarily have to be viewable on the user's screen.

CTR is, however, generally very low for most digital content and ads, typically as low as 0.1 %. This means that CTR is not an optimal metric to evaluate performance of digital content and ads.

The present invention uses a computer implemented (CI) attention prediction model to predict a user's attention on content appearing on web pages. The CI attention prediction model thereby enables prediction of the attention or fixation of users for digital content, such as ads, appearing on web pages when the users are visiting web pages or browsing the Internet. The predicted user attention, hereinafter referred to as "the predictions", is a valuable metric for content providers, such as advertisers. The predictions can be used to assess various formats of digital content in terms of deciding which particular format is most suitable for a particular digital content in terms of maximizing user attention. The predictions are also of value when optimizing the spending on digital content advertising for a media campaign. The CI attention prediction model can further be used by companies selling ad opportunities on their web pages in terms to set the pricing for different such content or ad types.

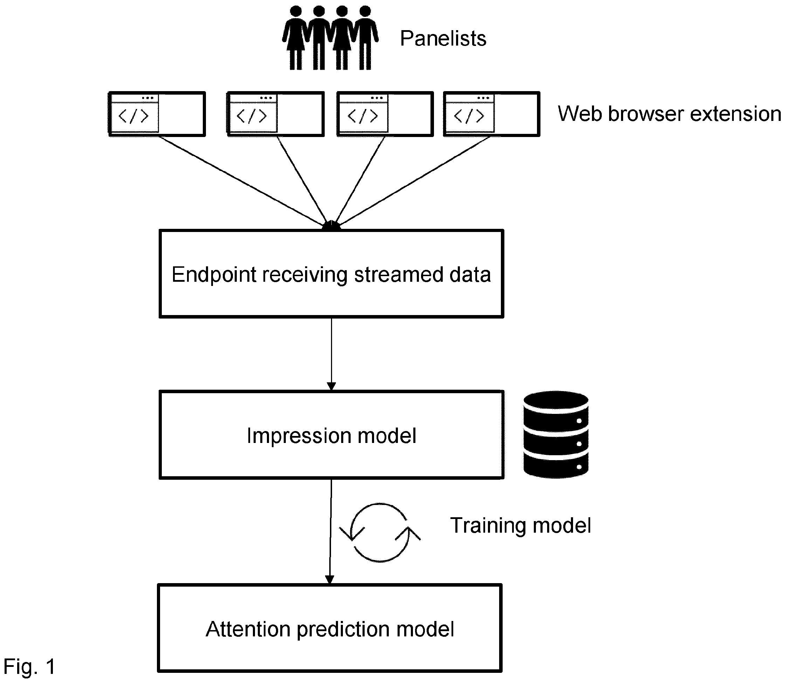

Herein follows an overview of training a CI attention prediction model with reference to Fig. 1. Beacon information and gaze information are collected from a panel of a plurality of panelists. The panel contains panelists across different demographic groups, including age, gender and location. Eye movements of the panelists are tracked in connection with Internet browsing and visiting web pages. Each panelist therefore has an eye tracking device, such as a Tobii Eye Tracker 4C, connected to their web browsing device, such as computer, to monitor and track eye movement of the panelist during web browsing. The eye tracking device then generates gaze information representing gaze positions of the panelist, and in particular such gaze positions of the panelist falling within the area occupied by the screen or display of or connected to the web browsing device. The gaze information is any type of information, variable, representation and the like that can, with or without analysis, be used to determine a panelist's gaze and thereby attention relative to a screen, or a portion of the screen, and in particular with regard to particular content objects, such as ads, displayed on the screen.

A computer program or software, such as in the form of a web browser extension, is installed in each panelist's web browsing device. The software passively crawls all web pages visited by a web browser. Hence, the software monitors web pages visited by the panelist to detect beacons associated with content objects, such as ads, appearing on the web pages. Beacon as used herein refers to a single detection of a content object, such as an ad, on a panelist's web browser. Technically, such beacons are actual HTML elements, which the software detects and monitors. The software further generates beacon information for the detected beacon and where this beacon information defines the content object associated with the beacon. In more detail, the software typically marks a detected beacon with a unique beacon identifier to enable monitoring of the lifecycle of the beacon and the panelist's interaction with the beacon while browsing.

Features or data associated with the beacon are collected by the software during the panelist's browsing session. Illustrative, but non-limiting, examples of such features associated with a beacon includes beacon identifier; panelist identifier; hostname of the web page; beacon type; content or ad format; panelist specifics, such as gender, age, education level, and location; beacon format specifics, including size parameters, such as width, height and/or dimensions, position parameters, such as coordinates for the content object or ad on the web page or screen, etc.

The software installed in the panelists' web browsing devices is preferably also connected to the eye tracking device and receives gaze information or data therefore. The software can then use the received gaze information when the panelist is web browsing to determine whether the coordinates of the panelist's gaze on the screen overlap with the coordinates of the beacon, or more correctly the coordinates of the content object for which the beacon has been generated. When this occurs, the software adds the gaze coordinates alongside the above-mentioned features collected by the software for a beacon. This means that the software may, additionally, collect data representing the panelist's fixation onto the coordinates on the screen occupied by the content object associated with the beacon, such as the number of times the panelist fixated on the content object, the total time the panelist fixated on the content object, fixation start time, fixation end time, etc. A fixation is triggered when the gaze coordinates as determined by the eye tracking device overlaps with the viewport (a panelist's visible area of a web page) pixel coordinates of the area occupied by the content object associated with a beacon. In a particular embodiment, coordinate overlap for a fixation is valid when the panelist's fixation point is within a predefined number of pixels, such as 10, from the boundary of the displayed content object. In another particular embodiment, the coordinate overlap must also occur for at least a predefined time period, such as 100 ms. In an embodiment, the software is event-triggered to collect the beacon information and the gaze information (using the eye tracking device) upon detection of a fixation.

The beacon information and gaze information as collected from the panel of panelists is forwarded or transmitted to a storage location, such as server, represented by an end point receiving streamed data in Fig. 1. The beacon and gaze information could be more or less continuously transmitted from the panelists' web browsing devices to the storage location, such as in the form of streamed data as shown in Fig. 1. Alternatively, the beacon and gaze information could be collected at the panelists' web browsing devices and temporarily stored therein to then be sent periodically or intermittently to the storage location, or upon an explicit request or interrogation from the storage location.

The received gaze and beacon information is then used in a method of training a Cl attention prediction model. The Cl attention prediction model of the invention is, thus, trained based on the gaze and beacon information collected from the panelists. The gaze and beacon information collected from the panelists is thereby used as training data for the Cl attention prediction model. This training data represents or simulates the natural Internet browsing behavior of a population as it is passively collected in the background by the eye tracking devices and installed software when the panelists visit various web pages using their web browsers. The beacon information contains data and features defining the beacons associated with the content objects, such as ads, whereas the gaze information contains data and features relating to panelist's attention and fixation of the content objects. This means that the gaze information contains data and features that could be used to determine a panelist's attention to a content object appearing in a web page on his or her screen. The gaze information can thereby be used to determine whether the content object was "successful" in capturing the panelist's attention or not. Correspondingly, the beacon information can be used to define, among others, the types, positions and/or formats of the content object. The CI attention prediction model can thereby be trained to find correlations between parameters representative of content objects and the display thereof and user's attention.

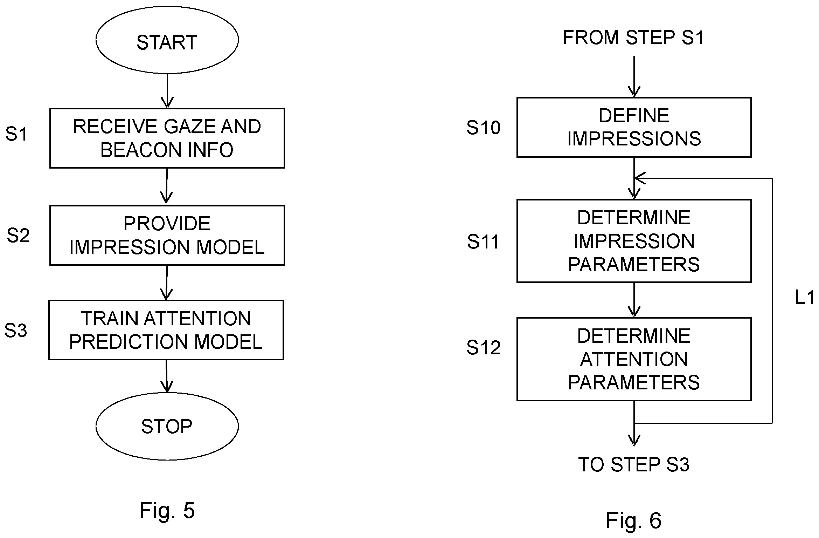

The method of training a CI attention prediction model, see Figs. 1 and 5, comprises receiving, in step S1 and for each panelist of a panel of a plurality of panelists, gaze information comprising gaze positions of the panelist and beacon information defining content objects appearing on web pages visited by the panelist. The method also comprises providing, in step S2, an impression model based on the beacon information and the gaze information received from the plurality of panelists. Impression parameters and attention parameters retrieved from the impression mode are then used in step S3 to train a CI attention prediction model to predict user attention on a content object appearing on a web page.

In an embodiment, step S2 in Fig. 5 is performed as shown in the flow chart of Fig. 6. Hence, the method continues from step S1 in Fig. 5. In this embodiment, step S10 comprises defining, based on the beacon information, impressions representing respective instances of a content object appearing on a web page. The following two steps S11 and S12 are preferably performed for each defined impression as schematically represented by the line L1 in Fig. 6. Step S11 comprises determining, based on the beacon information, impression parameters representative of a content object associated with the impression. Attention parameters are determined in step S12 based on the gaze information. These attention parameters are representative of a panelist's fixation on the content object associated with the impression when appearing on a web page.

Steps S11 and S12 can be performed sequentially in any order or at least partly in parallel. The method then continues to step S3 in Fig. 5.

The beacon and gaze information as received in step S1 is used to provide an impression model in step S2. In this step S2, the beacon and gaze information as collected from the panelists is transformed and aggregated into an impression model defining impressions and metrics of impressions. The impression model thereby combines the collected information to transform and aggregate it into a common format. This processing of the beacon and gaze information into impressions with associated metrics significantly improves the training of the CI attention prediction model by transforming various types and format of content objects, such as ads, into a common model and format.

As an example, there is no general standardization of defining ads in the ad-tech industries in terms of, for instance, the size and placement of ads on web pages, how the ads are displayed, characterization of the ads, etc. This in turn makes it hard to retrieve common parameters representative of different types that could be used as input when training the CI attention prediction model. The provision of the impression model enables generation of common such impression parameters that can be used as input to the CI attention prediction model to train the CI attention prediction model to accurately predict user attention on, for instance, ads.

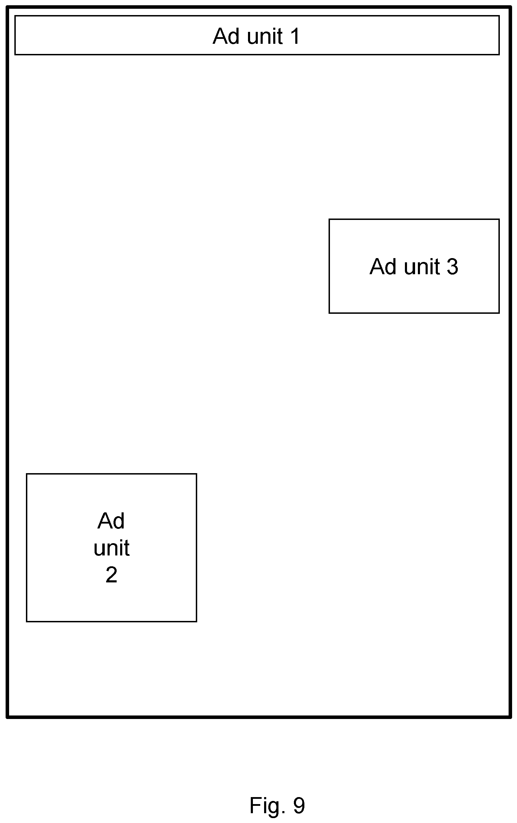

An impression is the basic unit within the impression model. An impression is an instance of a single content object, such as ad, appearing on a web page, such as in an ad unit. An ad unit is a portion of the web page, in which advertisements may be presented to user, see Fig. 9. There are many different types of ad units, such banner ads, interstitial ads, rewarded video ads, offerwall ads, and playable ads. Each ad unit looks and behaves differently.

Generally, an impression may be composed of one or more beacons. There could be a one-to-one relationship between an impression and a beacon, i.e., one impression for one beacon, in the impression model. However, there may also be multiple, i.e., at least two, beacons associated with an individual impression, for instance, when the impression as seen by a panelist may satisfy multiple detection criteria and thereby trigger multiple beacons. As an illustrative example, a given ad may generate a beacon for a hostname specific ad placeholder class and also an inline frame (iframe) from a recognized advertisement distribution platform. The impression model can then be used to group beacons into impressions and as a result of such a grouping or aggregation the relevant input parameters for the CI attention prediction model are derived from impressions and not beacons.

Step S2 as shown in Fig. 5 provides the impression model based on the beacon and gaze information received in step S1. In an embodiment, this step S2 comprises generating an impression model based on the beacon and gaze information. Hence, in this embodiment, the impression model is generated or created based on the received information. In another embodiment, an impression model has previously been generated based on past, i.e., previously received, beacon and gaze information. In such an embodiment, step S2 comprises updating the impression model based on the beacon and gaze information received in step S1.

The generation or update of the impression model is preferably performed as previously described herein in connection with Fig. 6. Thus, one or more impressions representing respective instances of one or more content objects, such as ads, appearing on web pages for browsing panelists are defined in step S10 based on the beacon information. Each such information could represent a single beacon or correspond to a group or aggregation of multiple beacons. Impression and attention parameters are then determined for the one or more defined impressions in steps S11 and S12.

Illustrative, but non-limiting, examples of impression parameters that can be determined in step S11 based on the beacon information include impression identifier, beacon identifier(s) of the one or more beacons corresponding to the impression, types of beacons corresponding to the impression, technical format of the content object, in view data representing if and/or how long the content object was in view for the panelist, hostname, channel, brand, data representing the size or dimension of the impression in the viewport, typically in units of pixels, ad unit type and demographic data for the panelist who received the impression.

In view regarding a content object or impression is preferably defined according to the Interactive Advertising Bureau (IAB), i.e., at least a predefined percentage, such as 50 %, of the impression pixels are visible in the viewport of the panelist's screen for at least a predefined minimum duration, such as 1 s or 2 s. The above mentioned in-view data could then include a variable defining whether the impression met the in-view standard mentioned above and/or other in-view parameters, such as percentage of the impression pixels that were visible in the viewport of the panelist's screen, how long the impression pixels were visible in the viewport of the panelist's screen and a time stamp defining when the impression pixels become visible in the viewport of the panelist's screen,

Illustrative, but non-limiting, examples of attention parameters that can be determined in step S12 based on the gaze information include fixation data, such as listing fixation objects for each individual fixation on the impression. Such a fixation objection may then comprise, one, multiple or all of, start time of fixation, end time of fixation and fixation duration. Further examples of attention parameters include a variable defining whether the impression was fixated or not, a variable defining whether the total fixation time on the impression exceeded a predefined threshold, total or cumulative time that the impression was fixated on, etc.

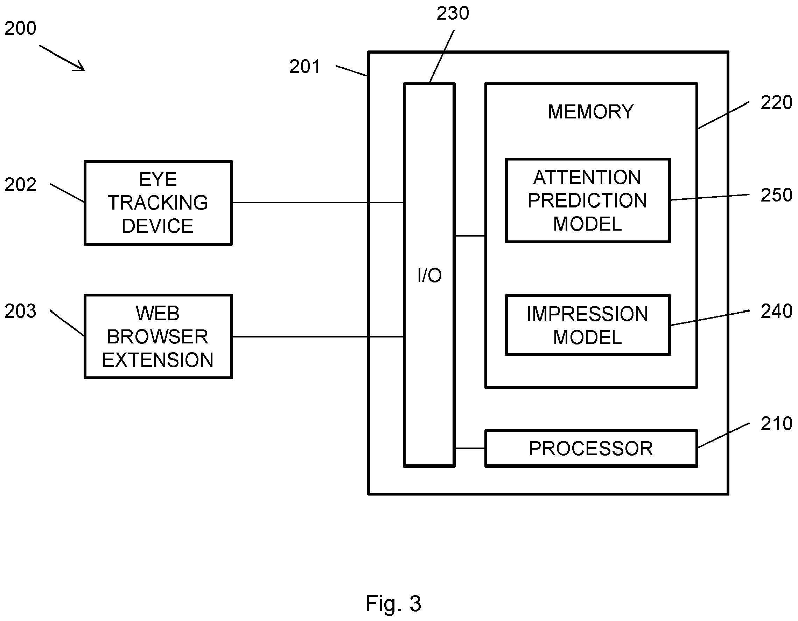

Impression and gaze parameters are then retrieved from the impression model and input into the CI attention prediction model to train the model in step S3 in Fig. 3. In such a case, at least one impression parameter and at least one gaze parameter are used as training data input into the CI attention prediction model. It is also possible to retrieve and use multiple impression parameters and/or multiple gaze parameters as training data for the CI attention prediction model, including using all the impression parameters and/or gaze parameters available from the impression model.

The CI attention prediction model may be implemented according to various embodiments. For instance, the CI attention prediction model could be in the form of a machine learning (ML) model. Generally, ML algorithms build a mathematical model based on training data, i.e., the attention and gaze parameters, in order to make predictions or decisions without being explicitly programmed to do so. There are various types of ML algorithms that differ in their approach, the type of data they input and output, and the type of task or problem that they are intended to solve. Illustrative, but non-limiting, examples of such ML algorithms include supervised learning algorithms, unsupervised learning algorithms, semi-supervised learning algorithms, reinforcement learning algorithms, self-learning algorithms, feature learning algorithms, sparse dictionary learning algorithms, anomaly detection algorithms, and association rule learning algorithms.

Performing machine learning involves creating a model, which is trained on training data and can then process additional data to make predictions or decisions. Various types of ML models could be used according to the embodiments, including, but not limited to artificial neural networks, decision trees, support vector machines, regression analysis, Bayesian networks and Genetic algorithms.

Furthermore, deep learning, also known as deep structured learning, is a ML method based on artificial neural networks with representation learning. Learning can be supervised, semi-supervised or unsupervised. Deep learning architectures, such as deep neural networks, deep belief networks, recurrent neural networks and convolutional neural networks, could be used to train and implement the CI attention prediction model. "Deep" in deep learning comes from the use of multiple layers in the network. Deep learning is concerned with an unbounded number of layers of bounded size, which permits practical application and optimized implementation, while retaining theoretical universality under mild conditions.

Hence, in an embodiment, step S3 in Fig. 5 comprises training, based on the impression and gaze parameters, a CI attention prediction ML model, such as a CI attention prediction deep learning model, to predict a user's attention on a content object appearing on a web page.

The CI attention prediction model could be based on a single ML or deep learning algorithm or an ensemble of multiple such ML or deep learning algorithms. Illustrative, but non-limiting, examples of such ML or deep learning algorithms include eXtreme Gradient Boosting (XGBoost), Field-Aware Factorization Machines (FFM), Logistic Regression (LR) and Random Forest (RF), including an ensemble of two or more of XGBoost, FFM, LR and RF.

In a particular embodiment, the CI attention prediction model is trained to predict a probability of an impression receiving a fixation. In another particular embodiment, the CI attention prediction model is trained to predict a probability of a content object, such as ad, appearing on a web page receives a fixation.

In an embodiment, a content object, such as ad, is displayable at multiple placement locations, such as ad units, on a web page, see Fig. 9. Each placement location is associated with a respective placement identifier. In such an embodiment, step S11 in Fig. 6 comprises determining, based on the beacon information, a placement identifier representative of a placement location, such as ad unit, of the content object, such as ad, associated with the impression.

Thus, in an embodiment, a web page may contain multiple so-called placement locations at which content objects can be placed for display to the panelists. These different placement locations could, for instance, be different ad units. Fig. 9 illustrates an example with three different such ad units. In this example, ad unit 1 could be a banner ad, whereas ad units 2 and 3 are examples of different interstitial ads. Each such ad unit is then associated with a respective placement identifier allowing identification of the particular ad unit on a web page.

The placement identifier, by being associated with a given placement location, such as an ad unit, is, in an embodiment, representative of a size or format of the placement location, the position (coordinates) of the placement location and/or the content type displayable at the placement location. Hence, placement location is a suitable impression parameter for usage as training data for the CI attention prediction model. In an embodiment, step S3 in Fig. 5 therefore comprises training the CI attention prediction model based on placement identifiers and attention parameters.

In an embodiment, step S11 in Fig. 6 comprises determining, based on the beacon information, demographic data of panelists who are exposed to the content objection associated with the impression. This embodiment is advantageously combined with the determining a placement identifier as described above. In such an embodiment, the impression parameters used to train the CI attention prediction model comprises placement identifiers and demographic data. Hence, in an embodiment, step S3 in Fig. 5 comprises training the CI attention prediction model based on placement identifiers, demographic data and attention parameters.

Illustrative, but non-limiting, examples of such demographic data include age, gender, education level, occupation and location of the panelists.

In an embodiment, step S11 in Fig. 6 comprises determining, based on the beacon information, in screen impression parameters defining whether a predefined percentage of pixels of the content object associated with the impression is visible in a viewport of the panelist's screen for at least a minimum duration.

In a particular embodiment, the predefined percentage of pixels is at least 50 %. In another particular embodiment, the minimum duration is 1 s or 2 s.

In an embodiment, the minimum duration is set to one of two predefined duration values, such as 1 s or 2 s, if the impression has a format equal to a predefined format and to the other of the two predefined duration values if the impression has another format. Illustrative, but non-limiting, examples of the predefined formats include in-stream and out-stream. Out-stream means that the impression code body contains an html<video/> element, whereas in-stream means that the impression appears on one of a number of predefined domains and occurs within the content stream of the video player on that web page.

In an embodiment, step S11 in Fig. 6 comprises determining, based on the beacon information and the gaze information, fixation impression parameters defining whether an impression is fixated by a panelist for at least a minimum duration. In this embodiment, an impression is fixated when gaze coordinates as determined based on the gaze information overlap with viewport pixel coordinates of an area occupied by the impression as determined based on the beacon information.

In a particular embodiment, coordinate overlap for a fixation is valid when the panelist's fixation point, i.e., gaze coordinates, is within a predefined number of pixels, such as 10, from the boundary of the area occupied by the impression. In another particular embodiment, the coordinate overlap must also occur for at least a predefined time period, such as 10 ms, 80 ms, or 100 ms.

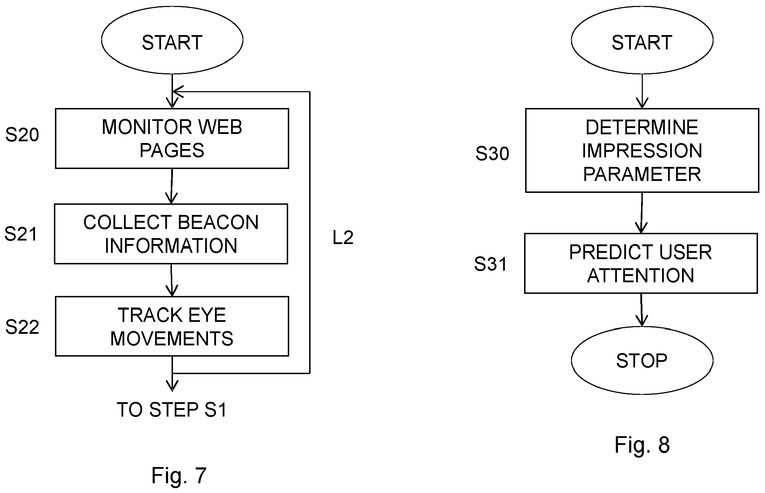

In an embodiment, the method comprises additional, optional steps S20 to S22 as shown in Fig. 7. These steps S20 to S22 are then performed for each panelist within the panel of a plurality of panelists as schematically shown by the line L2.

Step S20 comprises monitoring web pages visited by the panelist to detect beacons associated with content objects appearing on the web pages. Step S21 comprises collecting, for each detected beacon, beacon information defining the content object. Eye movement of the panelist is tracked in step S22 to generate gaze information comprising gaze positions of the panelist. The method then continues to step S1 in Fig. 5, where the collected beacon information and the generated gaze information are received.

Steps S20 to S22 do not need to be performed sequentially as indicated in Fig. 7. In clear contrast, the eye movement tracking in step S22 could be performed at least partly in parallel with monitoring web pages in step S20 and optionally at least partly in parallel with collecting the beacon information in step S21.

An advantage of the invention is that the Cl attention prediction model could be trained as the panelists are web browsing and thereby generating new training data for the Cl attention prediction model. This is schematically indicated in Fig. 1 that the Cl attention prediction model could be trained or re-trained as new gaze and beacon information is received from the panelists to update the impression model and from which new training data, i.e., impression and attention parameters, can be extracted.

The training of the Cl attention prediction model could be performed periodically or intermittently at selected occasions or more or less continuously as the panelists provide input data to the impression model. In a particular embodiment, the Cl attention prediction model is trained once a minimum amount of the beacon and gaze information has been collected from the panelists to enable retrieval of a relevant amount of updated or new impression and attention parameters as new training data from the impression model.

This training of the CI attention prediction model is important due to the continuously evolving nature of the web and people's evolving browsing habits while online. For example, re-designs of a popular website layout can influence the effectiveness of content object placements. The CI attention prediction model is therefore advantageously trained on recent training data generated for the most recent designs of web pages. Similarly, new content object placements, ad format upgrades, new ad units, new brands and campaigns are continuously introduced by publishers. The CI attention prediction model is therefore trained based on recent data to enable prediction of user attention for such new content object placements, ad format upgrades, ad units, brand and campaigns on web pages.

Hence, in an embodiment, the CI attention prediction model is preferably periodically or intermittently or continuously trained, such as on a sliding window of the most recent historical impression parameters and gaze parameters.

A single CI attention prediction model could be trained and then further used to predict user attention. It is, however, possible to train and use different such CI attention prediction models or different versions of the CI attention prediction model. In this latter case, the different versions of the model or the different models could be trained to correspond to different use cases, such as different ad-tech industry use cases. The different versions or models could then be designed to match the different options for how content objects, such as ads, may be allocated on web pages.

As an example, a first CI attention prediction model or model version could be trained for the use case of using placement identifiers. In some applications, content objects, such as ads, can only be allocated according to placement identifiers. These are identifiers that describe type of ad units sold by publishers. A second CI attention prediction model or model version could be more general to provide numerous additional features, according to which content objections, such as advertisement campaigns, can be allocated. These features appear in the impression model and include, for example, the publisher, the positioning on the page, the format of the ad video, static display, pre-roll, etc.

The CI attention prediction model of the invention, such as trained as described above and shown in Figs. 5 to 7, is then used to predict user attention as shown in Fig. 8. The method in Fig. 8 comprises determining at least one impression parameter representative of a content object to be presented to a user on a web page in step S30. A next step S31 comprises predicting user attention on the content object displayed on a web page based on the at least one impression parameter and a CI attention prediction model trained based in impression parameters and attention parameters derived from an impression model.

The impression parameters are representative of content objects associated with impressions and the attention parameters are representative of panelists' fixation on content objects associated with the impressions. The impression model is generated based on gaze positions of panelists of a panel of a plurality of panelists tracked while the panelists are browsing web pages and based on beacons detected while the panelists are browsing web pages. The beacons are associated with content objects presented to the users on the web pages.

This means that the CI attention prediction model can be used to predict user attention on a content object to be presented to a user on a web page on a screen, typically in a web browser. One or more impression parameters is or are derived for the content object, such as an ad, to be evaluated by the CI attention prediction model and is or are then input to the CI attention prediction model. The CI attention prediction model trained as described herein will then output a prediction of a user's attention on the content object when displayed on a screen, such as in a web browser.

In an embodiment, a content object is displayable at multiple predefined placement locations on a web page, see Fig. 9. Each such placement location is associated with a respective placement identifier. In such an embodiment, step S30 in Fig. 8 comprises identifying a placement identifier of a placement location among the multiple predefined placement locations. Step S31 comprises predicting user attention on the content object displayed on a placement location on a web page based on the identified placement identifier and the CI attention prediction model.

In this particular embodiment, the CI attention prediction model could be used to evaluate different placement locations, such as ad units, appearing on one or more web pages. The CI attention prediction model could, as in illustrative example, be used to evaluate the three different ad units 1-3 shown in Fig. 9 in terms of effectiveness in capturing a browsing user's attention. The CI attention prediction model could, for instance, predict that ad unit 1 has the highest user attention followed by ad unit 3 and then ad unit 2. This classification of the ad units by the CI attention prediction model is very valuable to media buying companies wanting to buy ad units for presenting their content objects, such as ads, on one or more web pages. The media buying companies could then select the ad unit that is predicted to have the highest user attention or the highest user attention in relation to cost. As another example, the user attention prediction could be used by the media buying companies to only deliver their content objects, such as ads, to ad units with a certain minimum predicted user attention.

The user attention prediction for different placement locations, such as ad units, by the CI attention prediction model is also valuable for the companies selling these placement locations to media buying companies in terms of setting prices for different placement locations at least partly based on the predicted user attention.

Hence, in an embodiment, the method also comprises determining a payment token or cost for the placement location associated with the identified placement identifier based on the predicted user attention.

A further use of the CI attention prediction model in setting costs for various placement locations, such as ad units, is to update such costs based on user attention from the CI attention prediction model. For instance, as mentioned in the foregoing, users browsing habits and behaviors while online are constantly changing. This means that that placement locations that previously were regarded as favorable in capturing users' attention might become less attractive. The user attention prediction from the CI attention prediction model could thereby be used evaluate or rather re-evaluate placement locations, including the costs for these different placement locations.

In an embodiment, a content object is displayable at multiple predefined placement locations on a web page. Each such placement location is associated with a respective placement identifier and a respective initial payment token or cost. In this embodiment, step S31 in Fig. 8 comprises predicting, for each placement identifier, user attention on a content object displayed on a placement location on a web page based on the identified placement identifier and the CI attention prediction model. The method also comprises determining, for each placement location, a respective updated payment token or cost based on the predicted user attention and the respective initial payment token or cost.

This means that initial costs for different placement locations, such as ad units, can be updated based on user attention predictions obtained from the CI attention prediction model.

In an embodiment, step S31 comprises predicting a fixation, by a user, on the content object displayed on the web page based on the at least one impression parameter and the CI attention prediction model.

Hence, in this embodiment, CI attention prediction model predicts fixation on content objects displayed on web pages on users' screens, such as in web browsers. Fixation on content objects is preferably defined as previously described herein, i.e., a user's gaze (gaze coordinates) will overlap with a viewport pixel coordinated of an area occupied by the content object, preferably for at least a predefined time period.

The CI attention prediction model could then be trained to output a value from, for instance, 0 representing no fixation to, for instance, 1 representing fixation, i.e., that the above-mentioned conditions for fixation will be met.

In an embodiment, the content object to be evaluated by the CI attention prediction model is transformed or converted into an impression. In such an embodiment, one or more of the above-mentioned impression parameters are determined for the content object in step S30. The determination in step S30 could then comprise determining impression parameters based on features of the content object as such, such as technical format of the content object, brand, size or dimensions. The determination may also, or alternatively, involve selecting target impression parameters for the content object, such as demographic data, for instance, age, gender, location, of the target audience for the content object, selecting placement location on a web page for the content object, such as selecting placement identifier and/or selecting the web page or pages at which the content object will be displayed, such as by selecting hostname or channel.

The CI attention prediction model may also be used to evaluate and thereby optimize the target audience or form for a given content object, such as an ad. As an illustrative example, impression parameters including different age groups could be determined or selected for an ad. The CI attention prediction model will then predict a respective user attention for the ad for each age group. This could be valuable to assess how different age groups may respond to the ad to thereby identify the most appropriate target audience for the ad.

Thus, the CI attention prediction model of the invention can be used to evaluate different selectable options for a content object, such as ad, including, for instance, on what web page(s) to display the content object, on what or which placement location(s) on such web page(s) to display the content object. Alternatively, or in addition, the CI attention prediction model of the invention can be used to identify target audience for the content objection, such as identifying the age group, gender group and/or location of users that are predicted to pay most attention to the content object when displayed on a web page.

The CI attention prediction model of the invention can also, or alternatively, be used to evaluate different formats or versions of a given content in terms of identifying the format or version that is predicted to result in the highest user attention. This approach could be combined with any of the embodiments mentioned above to possible identify different formats or versions that will have the highest predicted attention in different audience groups or on different web pages.

The CI attention prediction model is, as described above, preferably trained based on new training data as obtained from the panelists. This gives an opportunity to evaluate the response of a content object, such as ad, to provide feedback that can be used to improve the response of the content object. For instance, a company may have an ongoing ad campaign on one or more web pages. Data is collected from the panelists during the ongoing campaign and the collected data will thereby include beacon information for the ad(s) of the company. The CI attention prediction model will then be trained on training data at least partly generated for the company's ad(s). Once rtrained, the CI attention prediction model could be used to predict user attention for the company's ad(s). It is then possible that the user attention predictions from the CI attention prediction model could indicate that the company should modify ad(s) for the remaining part of the campaign to get even higher attention from browsing users. For instance, the CI attention prediction model could predict a higher user attention if changing placement location(s) for the ad(s), changing web page(s), i.e., hostname, where the ad(s) are to be presented, etc.

In an embodiment, step S31 comprises predicting an initial user attention on the content object displayed on the web page based on the at least one impression parameter and the CI attention prediction model. This embodiment also comprises, for each panelist of a panel of a plurality of panelists, monitoring web pages visited by the panelist to detect beacons associated with the content object appearing on the web pages, collecting, for each detected beacon, beacon information defining the content object and tracking eye movement of the panelist to generate gaze information comprising gaze positions of the panelist. The method also comprises updating the impression model based on the beacon information and the gaze information obtained from the plurality of panelists by defining, based on the beacon information, impressions representing respective instances of the content object appearing on a web page and, for each impression, determining, based on the beacon information, impression parameters representative of the content object and determining, based on the gaze information, attention parameters representative of a panelist's fixation on the content object associated with the impression when appearing on a web page. The embodiment further comprises training the CI attention prediction model based on impression parameters and attention parameters retrieved from the impression model. An updated user attention on the content object displayed on the web page is then predicted based on the at least one impression parameter and the trained CI attention prediction model.

If there are multiple CI attention prediction models or model versions available as mentioned in the foregoing, the method may optionally comprise selecting the particular model or model version to use, preferably based on allocation options available for the content object. For instance, if the only available allocation option is placement identifiers, then a first model or model version is selected, and if other allocation options are available then a second model or model version is selected.

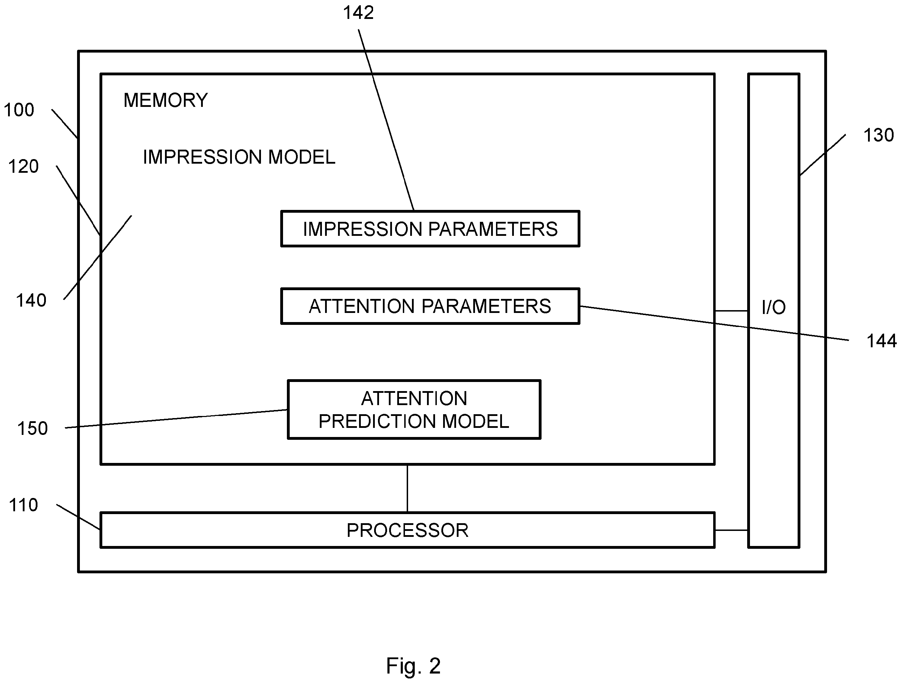

Fig. 2 is a schematic illustration of a device 100 configured to train a CI attention prediction model 150 according to an embodiment. The device 100 comprises a memory 120 configured to store an impression model 140 comprising impression parameters 142 and attention parameters 144. The memory 120 also comprises the trained CI attention prediction model 150. The device 100 in Fig. 10 has been shown with a single memory 120. The embodiments are, however, not limited thereto. In clear contrast, the device 100 could comprise or be, wirelessly or with wire, connected to multiple memories 120, such as a memory system of multiple memories. The device 100 also comprises a processor 110 configured to process received input data, such as gaze and beacon information, update the impression model 140 and train the CI attention prediction model 150. Correspondingly, to the memory 120, the device 100 could comprise a single processor 120 or multiple processors 120, such as a processing circuitry or system of multiple processors.

The device 100 further comprises a general input and output (I/O) unit 130 configured to communicate with external devices. The I/O unit 130 could represent a transmitter and receiver, or transceiver, configured to conduct wireless communication. Alternatively, or in addition, the I/O unit 130 could be configured to conduct wired communication and may then, for instance, comprise one or more input and/or output ports. The I/O unit 130 is in particular configured to receive gaze and beacon information originating from the panel of panelists.

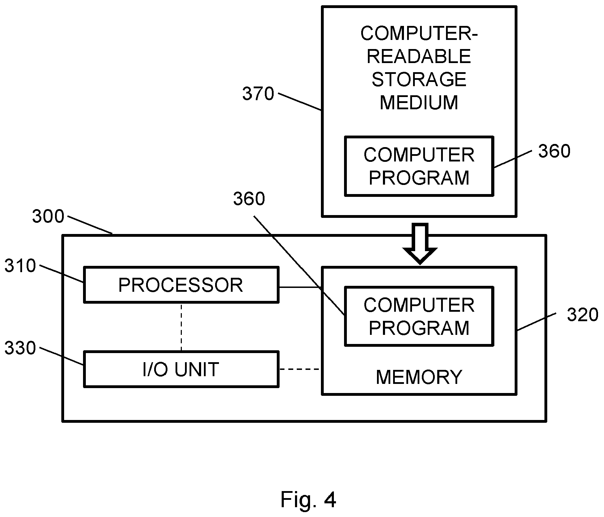

Fig. 4 is a schematic block diagram of a device 300, such as computer, comprising a processor 310 and a memory 320 that can be used to train a CI attention prediction model and/or predict user attention using such a CI attention prediction model. In such an embodiment, the training and/or prediction could be implemented in a computer program 360, which is loaded into the memory 320 for execution by the processor 310 of the device 300. The processor 310 and the memory 320 are interconnected to each other to enable normal software execution. An I/O unit 330 is preferably connected to the processor 310 and/or the memory 320 to enable reception of gaze and beacon information or impression parameters.

The term processor should be interpreted in a general sense as any circuitry, system or device capable of executing program code or computer program instructions to perform a particular processing, determining or computing task. The processor 310 is, thus, configured to perform, when executing the computer program 340, well-defined processing tasks such as those described herein.

The processor 310 does not have to be dedicated to only execute the above-described steps, functions, procedure and/or blocks, but may also execute other tasks.

In a particular embodiment, the computer program 360 comprises instructions, which when executed by a processor 310, cause the processor 310 to provide an impression model based on beacon information and gaze information obtained from a panel of a plurality of panelists. The gaze information comprises, for each panelist of the panel, gaze positions of the panelist and the beacon information defines, for each panelist of the panel, content objects appearing on web pages visited by the panelist. The processor 310 is also caused to provide the impression model by defining impressions based on the beacon information and, for each impression, determining, based on the beacon information, impression parameters representative of a content object associated with the impression and determining, based on the gaze information, attention parameters representative of a panelist's fixation on the content object associated with the impression when appearing on a web page. The processor 310 is further caused to train, based on impression parameters and attention parameters retrieved from the impression model, a CI attention prediction model to predict user attention on a content object appearing on a web page.

In another particular embodiment, the computer program 360 comprises instructions, which when executed by a processor 310, cause the processor 310 to determine at least one impression parameter representative of a content object to be presented to a user on a web page. The processor 310 is also caused to predict user attention on the content object displayed on a web page based on the at least one impression parameter and a computer-implemented attention prediction model trained based on impression parameters and attention parameters derived from an impression model. The impression parameters are representative of content objects associated with impressions and the attention parameters are representative of panelists' fixations on content objects associated with the impressions. The impression model is generated based on gaze positions of panelists of a panel of a plurality of panelists tracked while the panelists are browsing web pages and based on beacons detected while the panelists are browsing web pages and being associated with content objects presented to the panelists on the screen.

The proposed technology also provides a computer-readable storage medium 370 comprising the computer program 360. By way of example, the software or computer program 360 may be realized as a computer program product, which is normally carried or stored on a computer-readable medium 370, in particular a non-volatile medium. The computer-readable medium 370 may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program 360 may, thus, be loaded into the operating memory 320 of a computer 300 for execution by the processor 310 thereof.

In a particular embodiment, a non-transitory computer-readable medium 360 stores instructions that, when executed by a processor 310, cause the processor 310 to provide an impression model based on beacon information and gaze information obtained from a panel of a plurality of panelists. The gaze information comprises, for each panelist of the panel, gaze positions of the panelist and the beacon information defines, for each panelist of the panel, content objects appearing on web pages visited by the panelist. The processor 310 is also caused to provide the impression model by defining impressions based on the beacon information and, for each impression, determining, based on the beacon information, impression parameters representative of a content object associated with the impression and determining, based on the gaze information, attention parameters representative of a panelist's fixation on the content object associated with the impression when appearing on a web page. The processor 310 is further caused to train, based on impression parameters and attention parameters retrieved from the impression model, a CI attention prediction model to predict user attention on a content object appearing on a web page.

In another particular embodiment, a non-transitory computer-readable medium 360 stores instructions that, when executed by a processor 310, cause the processor 310 to determine at least one impression parameter representative of a content object to be presented to a user on a web page. The processor 310 is also caused to predict user attention on the content object displayed on a web page based on the at least one impression parameter and a computer-implemented attention prediction model trained based on impression parameters and attention parameters derived from an impression model. The impression parameters are representative of content objects associated with impressions and the attention parameters are representative of panelists' fixations on content objects associated with the impressions. The impression model is generated based on gaze positions of panelists of a panel of a plurality of panelists tracked while the panelists are browsing web pages and based on beacons detected while the panelists are browsing web pages and being associated with content objects presented to the panelists on the screen.

Fig. 3 schematically illustrates a system 200 for an attention prediction model. The system 200 comprises a plurality of eye tracking devices 202 configured to track eye movement of a panel of a plurality of panelists to generate gaze information comprising gaze positions of the panelists. The system 200 also comprises CI beacon units 203, such as in the form of web browser extensions, configured to monitor web pages visited by the panelists to detect beacons associated with content objects appearing on the web pages and collect, for each detect beacon, beacon information defining the content object. The system 200 also comprises a memory 220 and a processor 210. The memory and processor 210 are preferably implemented in a device 201, such as a computer. The memory 220 is configured to store an impression model 240 comprising impression parameters associated with impressions representing respective instances of a content object appearing on a web page. The memory 220 is also configured to store a CI attention prediction model 250 configured to predict user attention on a content object appearing on a web page. The processor 210 is configured to update the impression model 240 based on the beacon information and the gaze information obtained from the plurality of panelists by defining impressions based on the beacon information and, for each impression, determining, based on the beacon information, impression parameters representative of a content object associated with the impression and determining, based on the gaze information, attention parameters representative of a panelist's fixation on the content object associated with the impression when appearing on a web page. The processor 210 is also configured to train, based on impression parameters and attention parameters retrieved from the impression model, the CI attention prediction model 250 to predict a user's attention on a content object appearing on a web page.

The embodiments described above are to be understood as a few illustrative examples of the present invention. It will be understood by those skilled in the art that various modifications, combinations and changes may be made to the embodiments without departing from the scope of the present invention.

In particular, different part solutions in the different embodiments can be combined in other configurations, where technically possible. The scope of the present invention is, however, defined by the appended claims.

## Claims

1. A computer-implemented method of training a computer-implemented attention prediction model, the method comprising:
receiving (S1), for each panelist of a panel of a plurality of panelists, gaze information comprising gaze positions of the panelist and beacon information defining content objects appearing on web pages visited by the panelist;
providing (S2) an impression model (140) based on the beacon information and the gaze information received from the plurality of panelists by:
defining (S10), based on the beacon information, impressions representing respective instances of a content object appearing on a web page;
for each impression:
determining (S11; S30), based on the beacon information, impression parameters (142) representative of a content object associated with the impression; and
determining (S12), based on the gaze information, attention parameters (144) representative of a panelist's fixation on the content object associated with the impression when appearing on a web page; and
training (S3), based on impression parameters (142) and attention parameters (144) retrieved from the impression model (140; 240), a computer-implemented attention prediction model (150; 250) to predict user attention on a content object appearing on a web page.

2. The method according to claim 1, wherein
a content object is displayable at multiple placement locations on a web page;
each placement location is associated with a respective placement identifier; and
determining (S30) the impression parameters (142) comprises determining, based on the beacon information, a placement identifier representative of a placement location of the content object associated with the impression.

3. The method according to claim 2, wherein training the computer-implemented attention prediction model (150; 250) is based on placement identifiers and attention parameters (144) retrieved from the impression model (140).

4. The method according to claim 2, wherein determining (S11) the impression parameters (142) comprises determining, based on the beacon information, demographic data of panelists, who were exposed to the content object associated with the impression.

5. The method according to claim 4, wherein training (S3) the computer-implemented attention prediction model (150; 250) is based on placement identifiers, demographic data and attention parameters (144) retrieved from the impression model (140; 240).

6. The method according to claim 1, wherein determining (S11) impression parameters (142) comprises determining, based on the beacon information, in-screen impression parameters defining whether at least a predefined percentage of pixels of the content object associated with the impression is visible in a viewport of the panelist's screen for at least a minimum duration.

7. The method according to claim 1, wherein determining (S11) impression parameters (142) comprises determining, based on the beacon information and the gaze information, fixation impression parameters defining whether an impression is fixated by a panelist for at least a minimum duration, wherein an impression is fixated when gaze coordinates as determined based on the gaze information overlap with viewport pixel coordinates of an area occupied by the impression as determined based on the beacon information.

8. A computer-implemented method of predicting (S31) user attention, the method comprising:
determining (S11) at least one impression parameter (142) representative of a content object to be presented to a user on a web page;
predicting (S31) user attention on the content object displayed on a web page based on the at least one impression parameter (142) and a computer-implemented attention prediction model (150; 250) trained based on impression parameters (142) and attention parameters (144) derived from an impression model (140; 240), wherein
the impression parameters (142) are representative of content objects associated with impressions;
the attention parameters (144) are representative of panelists' fixation on content objects associated with the impressions; and
the impression model (140; 240) is generated based on gaze positions of panelists of a panel of a plurality of panelists tracked while the panelists are browsing web pages and based on beacons detected while the panelists are browsing web pages and being associated with content objects presented to the panelists on the web pages.

9. The method according to claim 8, wherein
a content object is displayable at multiple predefined placement locations on a web page;
each placement location is associated with a respective placement identifier;
determining (S11) the at least one impression parameter (142) comprises identifying a placement identifier of a placement location among the multiple predefined placement locations; and
predicting (S31) user attention comprises predicting user attention on the content object displayed on a placement location on a web page based on the identified placement identifier and the computer-implemented attention prediction model (150; 250).

10. The method according to claim 9, further comprising determining a cost for the placement location associated with the identified placement identifier based on the predicted user's attention.

11. The method according to claim 9, wherein
each placement location is associated with a respective placement identifier and a respective initial cost;
predicting user attention (S31) comprises predicting, for each placement identifier, user attention on a content object displayed on a placement location on a web page based on the identified placement identifier and the computer-implemented attention prediction model (150; 250), the method further comprising:
determining, for each placement location, a respective updated cost based on the predicted user's attention and the respective initial cost.

12. The method according to claim 8, wherein
predicting (S31) user attention comprises predicting an initial user attention on the content object displayed on the web page based on the at least one impression parameter (142) and the computer-implemented attention prediction model (150; 250);
for each panelist of a panel of a plurality of panelists:
monitoring (S20) web pages visited by the panelist to detect beacons associated with the content object appearing on the web pages;
collecting (S21), for each detected beacon, beacon information defining the content object;
tracking (S22) eye movement of the panelist to generate gaze information comprising gaze positions of the panelist;
updating the impression model (140; 240) based on the beacon information and the gaze information obtained from the plurality of panelists by:
defining (S10), based on the beacon information, impressions representing respective instances of the content object appearing on a web page;
for each impression:
determining (S11), based on the beacon information, impression parameters (142) representative of the content object; and
determining (S12), based on the gaze information, attention parameters (144) representative of a panelist's fixation on the content object associated with the impression when appearing on a web page;
training (S3) the computer-implemented attention prediction model (150; 250) based on impression parameters (142) and attention parameters (144) retrieved from the impression model (140; 240); and
predicting an updated user attention on the content object displayed on the web page based on the at least one impression parameter (142) and the trained computer-implemented attention prediction model (150; 250).

13. A non-transitory computer-readable medium (360, 370) storing instructions that, when executed by a processor (310), cause the processor (310) to
provide an impression model (140) based on beacon information and gaze information obtained from a panel of a plurality of panelists, wherein the gaze information comprises, for each panelist of the panel, gaze positions of the panelist and the beacon information defines, for each panelist of the panel, content objects appearing on web pages visited by the panelist, wherein the processor (310) is caused to provide the impression model (140) by:
defining (S10) impressions based on the beacon information; and
for each impression:
determining (S11), based on the beacon information, impression parameters (142) representative of a content object associated with the impression; and
determining (S12), based on the gaze information, attention parameters (144) representative of a panelist's fixation on the content object associated with the impression when appearing on a web page; and
training (S3), based on impression parameters (142) and attention parameters (144) retrieved from the impression model (140; 240), a computer-implemented attention prediction model (150; 250) to predict user attention on a content object appearing on a web page.

14. A system (100; 200; 300) for training an attention prediction model (150; 250), the system comprising:
a plurality of eye tracking devices (202) configured to track eye movement of a panel of a plurality of panelists to generate gaze information comprising gaze positions of the panelists;
computer-implemented beacon units (203) configured to monitor web pages visited by the panelists to detect beacons associated with content objects appearing on the web pages and collect, for each detected beacon, beacon information defining the content object;
a memory (120; 220; 320) configured to store:
an impression model (140; 240) comprising impression parameters associated with impressions representing respective instances of a content object appearing on a web page;
a computer-implemented attention prediction model (150; 250) configured to predict a user's attention on a content object appearing on a web page;
a processor (110; 210; 310) configured to:
update the impression model (140; 240) based on the beacon information and the gaze information obtained from the plurality of panelists by:
defining impressions based on the beacon information; and
for each impression:
determining, based on the beacon information, impression parameters (142) representative of a content object associated with the impression; and
determining, based on the gaze information, attention parameters (144) representative of a panelist's fixation on the content object associated with the impression when appearing on a web page; and
train, based on impression parameters (142) and attention parameters (144) retrieved from the impression model (140; 240), the computer-implemented attention prediction model (150; 250) to predict user attention on a content object appearing on a web page.

15. A non-transitory computer-readable storage medium (360, 370) storing instructions that, when executed by a processor (310), cause the processor (310) to
determine at least one impression parameter representative of a content object to be presented to a user on a web page;
predict user attention on the content object displayed on a web page based on the at least one impression parameter and a computer-implemented attention prediction model trained based on impression parameters and attention parameters derived from an impression model, wherein
the impression parameters are representative of content objects associated with impressions;
the attention parameters are representative of panelists' fixations on content objects associated with the impressions; and
the impression model is generated based on gaze positions of panelists of a panel of a plurality of panelists tracked while the panelists are browsing web pages and based on beacons detected while the panelists are browsing web pages and being associated with content objects presented to the panelists on the screen.
